# EUROPEAN PATENT APPLICATION

(11) **EP 2 065 153 A2**
(43) Date of publication of application: **03.06.2009**
(21) Application number: 08170047.8
(22) Date of filing: 27.11.2008
(51) Int. Cl.: B29C 44/12, B29C 44/14, B60R 13/02

(54) **A method for manufacturing leather or delicate upholstery paneling, specifically for automotive interiors**

(30) Priority: 28.11.2007 IT RM20070619
(71) Applicant: Alder Evo S.r.l., 80121 Napoli (IT)
(72) Inventor: Uguccioni, Fabrizio, 61011 Gabicce Mare (IT); Aluigi, Paolo, 61100 Pesaro (IT)
(74) Representative: Cinquantini, Bruno

(57) **Abstract**

A method for manufacturing leather and/or quality material paneling and moldings forming automotive interiors. Specifically, the method allows to obtain a product having a constant, controlled quality degree in addition to shorter production times and a more reasonable use of glue.

## Description

### Field of the invention

The present invention relates to a method for manufacturing paneling and moldings, specifically for the automotive sector.

### State of the art

Moldings, specifically those externally upholstered with quality materials, such as leather and Alcantara, are the object of a very accurate, laborious processing because gluing the upholstery to the padding and the padding to the support is an operation carried out by hand, especially if the upholstery needs to be centered with respect to seams and decorations.

Specifically, the currently adopted method is entirely manually, and includes a first step in which a rigid support, which confers shape and mechanical, thermal and safety features to the panel, is made.

A soft substrate, generally made of expanded polyurethane, is glued onto said panel to form the padding.

An adhesive is sprayed onto the free face of the substrate and the upholstery is positioned, thus centering seams and decorations. At this point, the upholstery material is heated, in moderation, until the glue between the upholstery material and the soft substrate is activated, thus developing its adhesive properties.

The heating is carried out by hand, e.g. by means of a manual hot air generator, and therefore a uniform thermal flow on every square centimeter of the surface concerned by the treatment cannot be ensured.

Both centering and heating operations of the upholstery are particularly critical for obtaining a good degree of uniformity and repeatability of results on a high number of specific products.

Furthermore, an excessive heating in some points might damage the upholstery itself, the upholstery being particularly sensitive to thermal variations, with evident changes of rigidity and color.

### Summary of the invention

It is the object of the present invention to provide a method for manufacturing moldings which makes the assemblage of panels and moldings, specifically for automotive interiors, faster and more certain.

It is a further object of the present invention to provide paneling and moldings having a more constant degree of quality.

The present invention, therefore, intends to reach the objects discussed above by implementing a molding method which, in accordance with claim 1, includes the following steps:
- making a soft substrate by means of a first mold;
- inserting said substrate into a second mold and foaming the material forming the supporting element so that it integrates and bonds with the soft substrate, thus eliminating the step of gluing the soft substrate onto the support.

According to another aspect of the invention, said method is easily applied when a step of positioning the upholstery material in the mold and a step in which said upholstery material is spread with glue on the surface which contacts the soft substrate are interposed between said two steps, so that a complete molding which does not require further processing is obtained after foaming.

The dependent claims describe preferred embodiments of the invention.

Further features and advantages of the present invention will be more apparent in the light of the detailed description of a preferred, but not exclusive, embodiment of a method for manufacturing leather or delicate upholstery paneling, particularly for automotive interiors, illustrated by way of non-limitative example, with the aid of the accompanying drawings, in which:
Fig. 1 shows a section of a paneling or molding which highlights the layers forming it;
Figs. 2a, 2b and 2c show the step sequence which includes the step of thermoforming a soft substrate;
Figure 3a shows the step of inserting said substrate into a further mold in which the step of foaming the rigid support is carried out (Fig. 3b) which remains bound to the soft substrate;
Figs. 4a and 4b show the step of coating and of gluing the soft substrate to the upholstery material, respectively;
Figs. 5a, 5b and 5c refer to another variant of the method which includes, upon manufacturing the soft substrate, arranging the upholstery of the substrate in a mold, and foaming the rigid support, respectively.

### Detailed description of a preferred embodiment of the invention

The method for manufacturing paneling, in accordance with the present invention, includes two main steps for making automotive interior moldings and paneling, upholstered with materials such as for example leather, Alcantara, and the like.

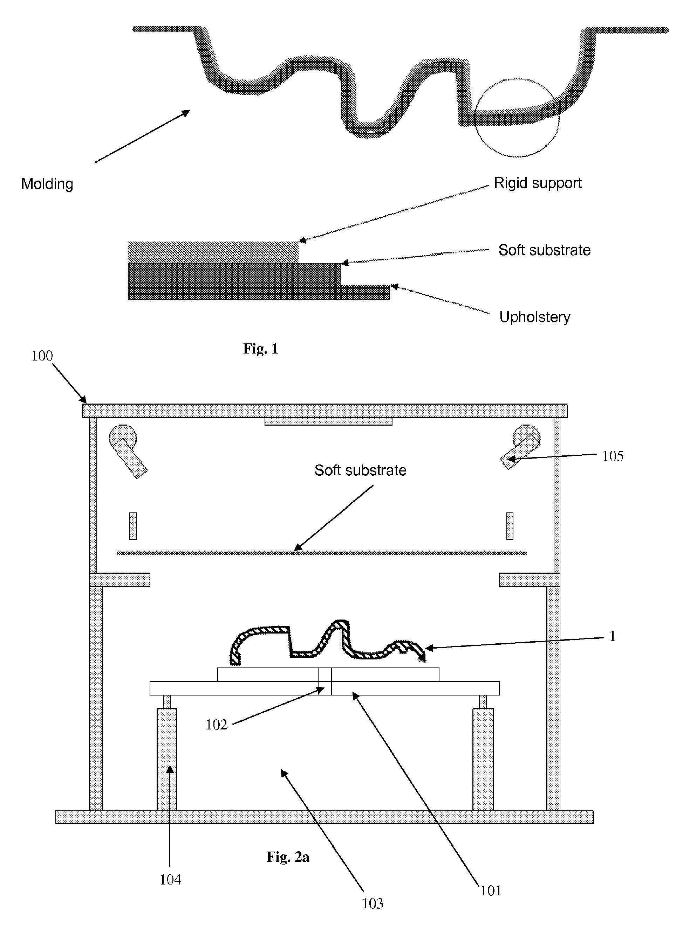

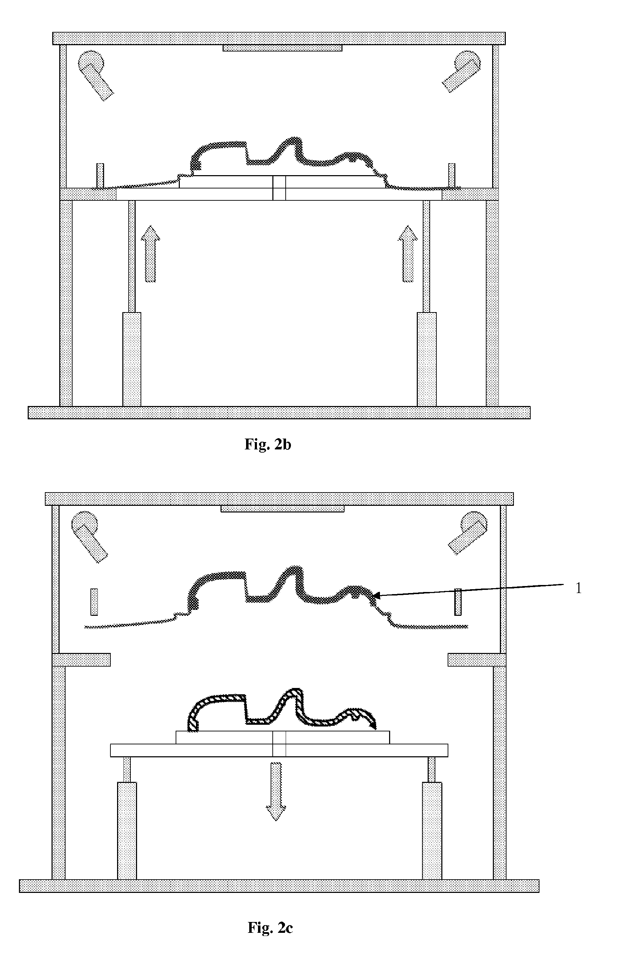

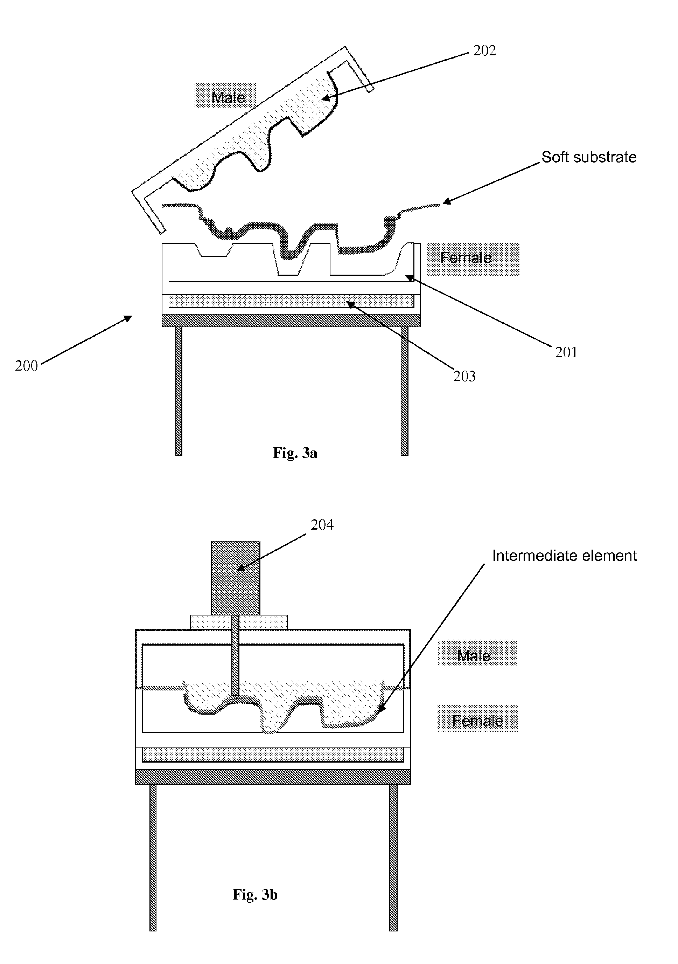

The first of said main steps includes making a soft substrate, e.g. by thermoforming, by means of a mold 1 (see figs. 2a, 2b and 2c). The second step includes inserting said substrate in another mold 200 (see figs. 3a and 3b), in which the expanded polyurethane injection foaming is carried out, in order to make an intermediate element including the rigid paneling support and soft substrate, which are reciprocally integral, thus avoiding the step of gluing the two individual element and the costs related to the use of glue.

Preferably, said mold 200 is kept at a temperature in the range of 70 - 90°C.

Specifically, the method for achieving the first step of the method is per se known, thus being formed by the following:
- a step in which a portion of material forming the soft substrate is heated at temperatures in the range of 100°C - 180°C, and in any case in relation to the physical-chemical features of the material;
- a step in which said portion is laid on said mold 1;
- a step in which a vacuum is created under said mold, so that the substrate perfectly adheres to the support while cooling.

Similarly, the thermoforming machine 100 adapted to implement the aforesaid method for achieving the first step, includes:
- a mobile surface 101 provided with at least one suction hole 102;
- lifting means 104 of said surface 101;
- a suction chamber 103 which is open outwards only by means of said at least one suction hole 102;
- means 105 for heating the soft substrate.

After the step of positioning the heated soft substrate in the mold 1, the surface 101 is lifted thus creating a vacuum inside said suction chamber which continues outwards through at least one hole 102, which induces the soft substrate to perfectly adhere to the mold.

The second step of the method for manufacturing moldings and paneling is made easier by means of a mold 200 consisting of a mold 201 and a matched mold 202, kept at a temperature in the range of 70 - 90°C, or in any case in relation to the activation temperature of the glue, and foaming injection device 204.

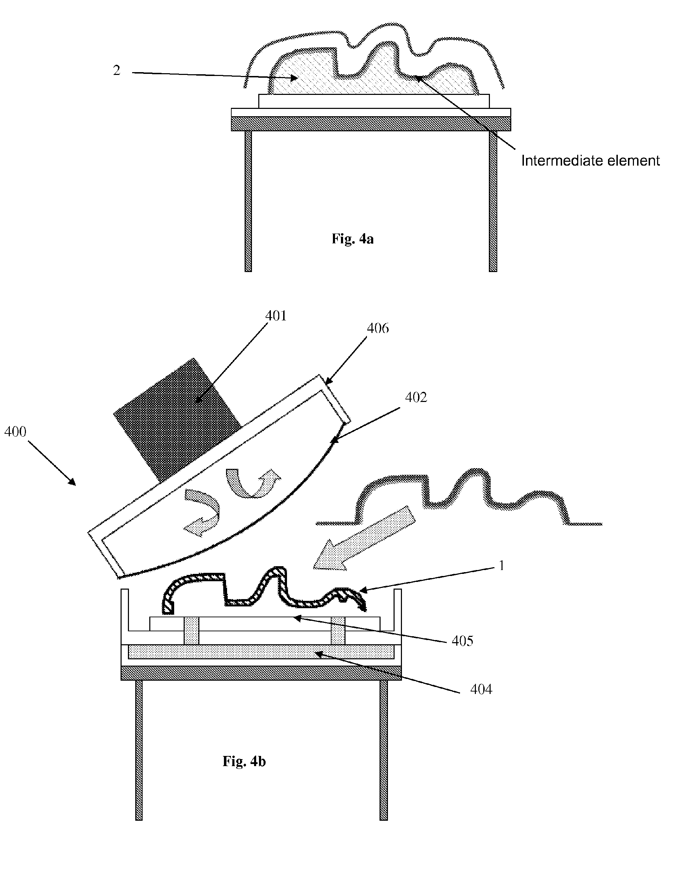

A preferred variant of the method of manufacturing paneling and moldings provides for said two main steps to be followed by the following steps, as shown in figures 4a and 4b:
- upholstering said intermediate element, which is arranged on a support 2, so as to be able to lay the upholstery on the surface of the soft substrate by hand without damaging it and operating the centering of possible stylistic seams, so as to avoid the formation of creases, the soft substrate and/or the face of the upholstery which contacts it being spread with glue;
- gluing the upholstery by taking the assembly obtained in the preceding step to a known, homogenous temperature while uniformly applying a force which compresses said upholstery onto said intermediate element.

Preferably, said known, homogenous temperature is in the range of 90 - 140°C, or however higher than the activation temperature of the glue, and said compression is obtained by means of an optimal pressure of 0.6 kg per square centimeter.

Furthermore, the preferable application time of said pressure is of the order of some minutes.

The support 2 may possibly coincide with said mold 1.

In order to ensure the uniform pressing of the upholstery on the substrate, a specific machine 400 consisting of the following components has been prepared:
- a surface 405 on which said support 2 is arranged;
- an upper shell 406 adapted to be closed onto said surface thus enclosing said support;
- a silicone membrane 402 adapted to adhere onto said support 2;
- a suction device 404 adapted to create a vacuum in the zone between said surface 405 and said silicone membrane 402;
- an electric heater 401 adapted to generate the heat required to activate the glue interposed between the upholstery and the soft substrate.

Specifically, the vacuum creation operated underneath said membrane generates a uniform pressure aimed at compressing the upholstery onto the soft substrate.

Said silicone membrane may be replaced by Parà rubber or other sufficiently elastic, resistant plastic sheet with a thickness in the range of 1.5 - 4 mm.

In case of moldings having complex shapes, the silicone membrane is required to be elongated, even in an excessive manner implying a fast deterioration thereof. Then, such a silicone membrane 402 is integrated with a further matched mold, in order to facilitate the coupling of the required shapes of the upholstery. In such a case, said suction device 404 may be completed by a compression device adapted to inject possibly hot, compressed air by means of a specific holes obtained in said further matched mold, so as to generate an overpressure useful for favoring the adhesion of the upholstery onto the soft substrate.

Furthermore, said electric heater 401 may heat the silicone membrane and then the glue either directly, e.g. by radiating heat by means of electric resistors, or indirectly, by means of hot water or air generation.

In another preferred embodiment of the method, said two steps of making the soft substrate and inserting the same into said assemblage mold are preceded by a step of positioning the upholstery material, which has been possibly spread with glue, in the same mold. It is apparent that this further step may be switched in the sequence order with the step of making the soft substrate, without any consequences. It is indeed possible to make said soft substrate and then place it along with the upholstery in the assemblage mold.

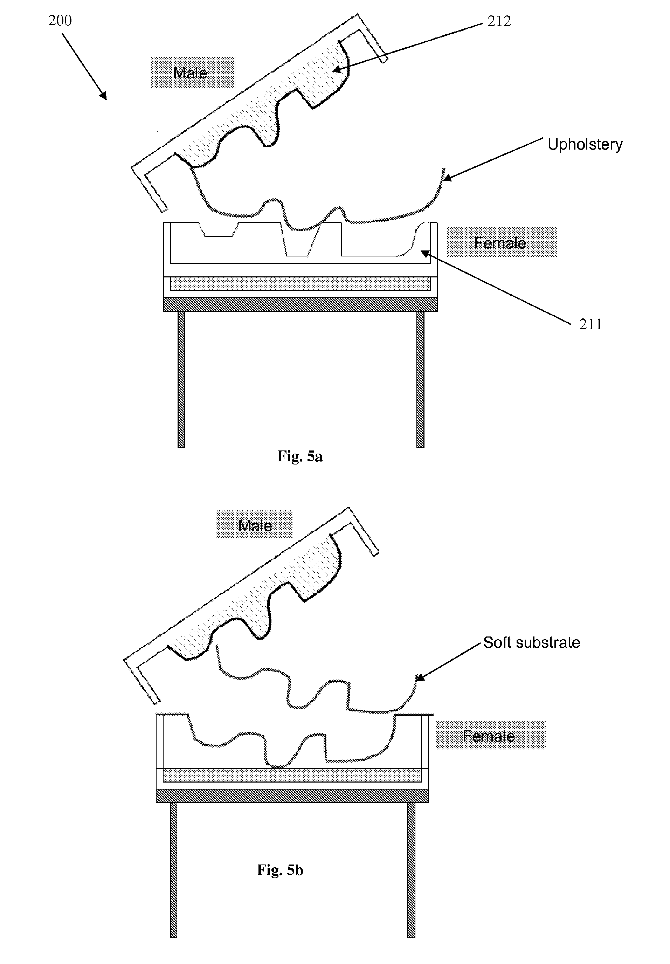

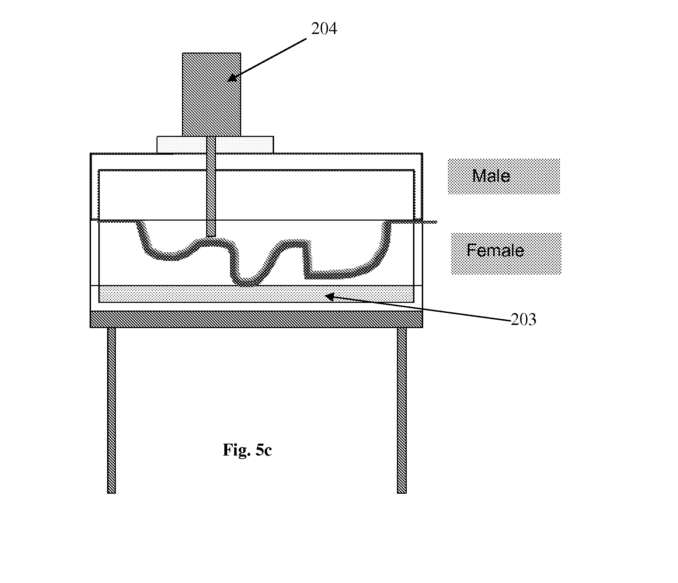

Therefore, such a preferred variant of the method, which is particularly adapted for simple shaped moldings and paneling, includes the following steps:
- making the soft substrate, see figs. 2a, 2b and 2c;
- inserting the upholstery material into an assemblage mold, with the face which will be visible remaining in contact with the bottom of the mold and (possibly) with the other face spread with glue (see fig. 5a);
- inserting said soft substrate into the same assemblage mold (see fig. 5b), possibly with the surface which contacts the upholstery being spread with glue, and foaming the material forming the supporting element (see fig. 5c), so that it integrates and binds with the soft substrate and so that the exothermic foaming process activates the glue with which the upholstery material (and/or the soft substrate) is spread in order to remain glued to the soft substrate (to the upholstery material).

According to this preferred variant of the method, a molding or paneling is obtained faster than with other variants, avoiding to provide for other contrivances for heating the assemblage mold because the heat required for activating the glue between the layer of upholstery material and the soft substrate is provided by the exothermic reaction concurrent with the foaming of the material forming the supporting element.

The preferred material for making the supporting element is the expanded polyurethane; while the soft substrate may be chosen among the following materials:
- polypropylene-based foam with density between 30 and 90 kg/m³, thickness between 2 and 6 mm;
- polyethylene-based foam with density between 25 and 80 kg/m³, thickness between 2.5 and 6 mm;
- open-cell polyurethane foam (density between 30 and 70 kg/m³ and thickness between 2 and 7 mm) which is coupled with a barrier material, such as for example polyurethane film with a thickness between 30 and 100 microns;
- any other material which serves the function of soft substrate and allows molding onto polyurethane, thus having at least one barrier side preventing the passage thereof.

The moldings and paneling made with the method object of the present invention and variants thereof, in addition to having constant aesthetic features and a constant quality degree, contain a smaller amount of glue.

Specifically, the degrading of the upholstery material by excessive heating or excessive pressure and the presence of unstuck points between the upholstery and the padding are avoided.

The particular embodiments herein described do not limit the content of this application which covers all the variants of the invention defined in the claims.

## Claims

1. A method for manufacturing leather or delicate upholstery paneling, specifically for automotive interiors, wherein at least one mold (200) is included, comprising the following steps:
a) making a soft substrate by means of a first molding operation;
b) foaming, by injection, the material forming a supporting element, so that it integrates and binds with the soft substrate, thus obtaining an intermediate processing element.

2. A method according to claim 1, wherein the further following steps are included:
c) upholstering said first intermediate processing element with an upholstery layer;
d) gluing said upholstery layer onto said intermediate processing element to obtain an assembly.

3. A method according to claim 2, wherein said step of upholstering c) includes the positioning of said intermediate element onto a support (2) for laying the upholstery layer by hand onto the surface of the intermediate element, the soft substrate and/or the face of the upholstery which contacts it being spread with glue.

4. A method according to claim 3, wherein said step of gluing includes that the assembly obtained upon said step of upholstering is taken to a predetermined, homogenous temperature while applying a force which uniformly compresses said upholstery onto said intermediate element.

5. A method according to claim 4, wherein said predetermined, homogenous temperature is either in the range of 90 - 140°C or higher than the activation temperature of the glue.

6. A method according to claim 4, wherein said force is uniformly applied to said upholstery on said intermediate element thus exerting a pressure of approximately 0.6 kg per square centimeter.

7. A method according to claim 1, further provided with a step, either preceding or following said first step a), of making said soft substrate, wherein an upholstery and the soft substrate in contact therewith are inserted into a second mold, by interposing a layer of glue between the two, so as to obtain the product already finished with the step of foaming.

8. A method according to claim 7, wherein said layer of glue is applied to either said upholstery or said soft substrate.

9. Leather or upholstery paneling specifically for car interiors made by means of the disclosed method according to anyone of the preceding claims, including a rigid substrate, a soft substrate and a leather or delicate material upholstery.

10. A paneling according to claim 9, wherein the soft substrate may be either a polypropylene-based foam with density between 30 and 90 kg/m³ and thickness between 2 and 6 mm, or a polyethylene-based foam with density between 25 and 80 kg/m3 and thickness between 2,5 and 6 mm, or an open-cell polyurethane foam with density between 30 and 70 kg/m3 and thickness between 2 and 7mm, to which a barrier material, such as for example polyurethane film with a thickness between 30 and 100 microns, may be coupled.
